# EUROPEAN PATENT SPECIFICATION

(11) **EP 2 206 911 B1**
(45) Date of publication and mention of the grant of the patent: **16.02.2011**
(21) Application number: 09178521.2
(22) Date of filing: 09.12.2009
(51) Int. Cl.: F02M 35/16, B60K 13/02

(54) **Straddle type vehicle**
Aufsitz-Fahrzeug
Véhicule de type à selle

(30) Priority: 26.12.2008 JP 2008332786
(43) Date of publication of application: 14.07.2010
(73) Proprietor: Yamaha Hatsudoki Kabushiki Kaisha, Shizuoka-ken Shizuoka 438-8501 (JP)
(72) Inventor: Onoue, Tomoki, Shizuoka-ken Shizuoka 438-8501 (JP); Tarumi, Seiji, Shizuoka-ken Shizuoka 438-8501 (JP)
(74) Representative: Schoppe, Fritz

(56) References cited:
- EP-A2- 1 081 369
- EP-A2- 1 087 127
- JP-A- 8 053 088
- JP-A- 2008 223 595
- US-A1- 2006 027 202

## Description

### BACKGROUND OF THE INVENTION

### Field of the Invention

The present invention relates to straddle type vehicles and more specifically to a straddle type vehicle including an air chamber and a duct used to guide air to the air chamber.

### Description of the Background Art

There is a known motorcycle that includes an air chamber and a duct used to guide air to the air chamber. JP 2008-223595 A discloses a motorcycle including a main duct and a sub duct used to send air into an air cleaner (air chamber). The intake amount of the sub duct is smaller than that of the main duct. The main duct of the motorcycle is provided with an opening/closing valve that cut off the flow of air to the main duct. The opening/closing valve closes the main duct when a prescribed condition is established. The motorcycle can reduce intake noise by closing the main duct.

The sub duct in the motorcycle disclosed by JP 2008-223595 A is provided adjacent to the main duct. The main and sub ducts are both open backward and obliquely upward. The main and sub ducts of the motorcycle are both open in a direction different from the advancing direction of the motorcycle. This makes it difficult for the main and sub ducts to introduce traveling wind effectively. Therefore, it is difficult to improve the intake efficiency of air sent into the air cleaner.

A motorcycle having two intake ducts of the same diameter around the head pipe is known from US 2006/0027202A1.

### SUMMARY OF THE INVENTION

It is an object of the present invention to provide a straddle type vehicle that allows the intake efficiency to improve while reducing the intake noise.

A straddle type vehicle according to the present invention includes an engine, an air chamber, a head pipe, a first duct, and a second duct. The air chamber is connected to the engine. The head pipe is provided ahead of the air chamber. The first duct is formed to avoid the head pipe and connected to the air chamber. The second duct is formed to avoid the head pipe and has a smaller intake amount than that of the first duct connected to the air chamber. The first duct includes a first intake port opened toward the front of the straddle type vehicle and an opening/closing valve arranged to open/close the flow path of air in the first duct. The intake path in the second duct is connected to an intake path in the first duct on the downstream side of the opening/closing valve.

According to the present invention, when the opening/closing valve is open, air can be supplied efficiently to the air chamber via the first and second ducts. When the opening/closing valve is closed, air can be supplied to the air chamber only from the second duct. The intake noise can be reduced by closing the opening/closing noise.

Other features, elements, steps, characteristics and advantages of the present invention will become more apparent from the following detailed description of the preferred embodiments of the present invention with reference to the attached drawings.

### BRIEF DESCRIPTION OF THE DRAWINGS

Fig. 1 is a left side view of an entire structure of a motorcycle according to a first preferred embodiment of the present invention.
Fig. 2 is a plan view of a peripheral structure of a handle in the motorcycle according to the first preferred embodiment.
Fig. 3 is a front view of a structure of a front cowling in the motorcycle according to the first preferred embodiment.
Fig. 4 is a left side view of an arrangement of ducts in the motorcycle according to the first preferred embodiment.
Fig. 5 is an enlarged view of a peripheral structure of a rear part of a duct in the motorcycle according to the first preferred embodiment.
Fig. 6 is a left side view of an arrangement of the ducts in the motorcycle according to the first preferred embodiment.
Fig. 7 is a perspective view of a head pipe and a sub duct in the motorcycle according to the first preferred embodiment.
Fig. 8 is a sectional view of the head pipe and a main frame in the motorcycle according to the first preferred embodiment.
Fig. 9 is a left side view of an entire structure of a motorcycle according to a second preferred embodiment of the present invention.
Fig. 10 is a sectional plan view of an arrangement of ducts in the motorcycle according to the second preferred embodiment.
Fig. 11 is a front view of a structure of a front cowling in the motorcycle according to the second preferred embodiment.
Fig. 12 is a left side view of an arrangement of a sub duct in the motorcycle according to the second preferred embodiment.
Fig. 13 is a right side view of an arrangement of a main duct in the motorcycle according to the second preferred embodiment.
Fig. 14 is an enlarged view of an arrangement of the main duct in the motorcycle according to the second preferred embodiment.

### DETAILED DESCRIPTION OF THE PREFERRED EMBODIMENTS

Now, preferred embodiments of the present invention will be described in conjunction with the accompanying drawings.

### First Preferred Embodiment

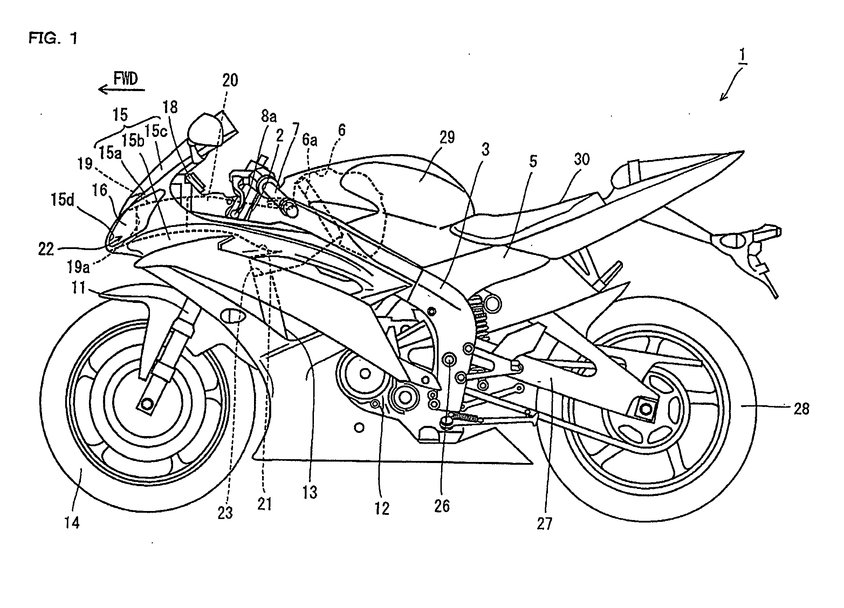

Fig. 1 is a left side view of an entire structure of a motorcycle 1 according to a first preferred embodiment of the present invention. According to the first preferred embodiment, the motorcycle 1 will be described as an example of a straddle type vehicle according to the present invention. In the drawings, the arrow FWD refers to the forward advancing direction of the motorcycle 1. In the following description of the first preferred embodiment, the "front-back" direction and the "right" and "left" refer to these directions with respect to the advancing direction of the vehicle unless otherwise specified. In other words, the forward direction viewed from a rider on the seat is the forward direction of the motorcycle 1 and the "right" and "left" viewed from a rider on the seat are the "right" and "left" of the motorcycle 1. The widthwise direction of the vehicle is the same as the right-left direction.

As shown in Fig. 1, a head pipe 2 is provided in a front part of the motorcycle 1. A main frame 3 is connected to a rear part of the head pipe 2. The main frame 3 extends backward and downward. A rear part of the main frame 3 is connected with a seat frame 5. The seat frame 5 extends backward and upward. A handle 7 is connected rotatably at an upper part of the head pipe 2.

An engine 12 is provided under the main frame 3. An air cleaner 6 is provided above the main frame 3. Air taken into the air cleaner 6 is sent into the engine 12.

Front forks 11 are provided on the right and left of the head pipe 2. The front forks 11 extend downward. A radiator 13 is provided in front of the engine 12 and behind the front forks 11. The radiator 13 uses traveling wind coming in from the front to cool cooling water. The radiator 13 cools the engine 12 by circulating the cooling water in the engine 12. A front wheel 14 is attached rotatably at a lower end of the front forks 11.

A front cowling 15 arranged to cover a front side of the motorcycle 1 is provided in front of the head pipe 2. The front cowling 15 includes an upper cowling 15a, a lower cowling 15b, and a screen 15c attached above the upper cowling 15a. The upper and lower cowlings 15a and 15b are formed integrally.

A pivot shaft 26 is provided at a rear end of the main frame 3. A front end of a swing arm 27 is supported at the pivot shaft 26. The swing arm 27 can swing up and down around the pivot shaft 26. A rear wheel 28 is attached rotatably at a rear end of the swing arm 27.

A fuel tank 29 is provided above the main frame 3 and behind the air cleaner 6. A seat 30 is provided behind the fuel tank 29. The seat 30 is supported at the seat frame 5.

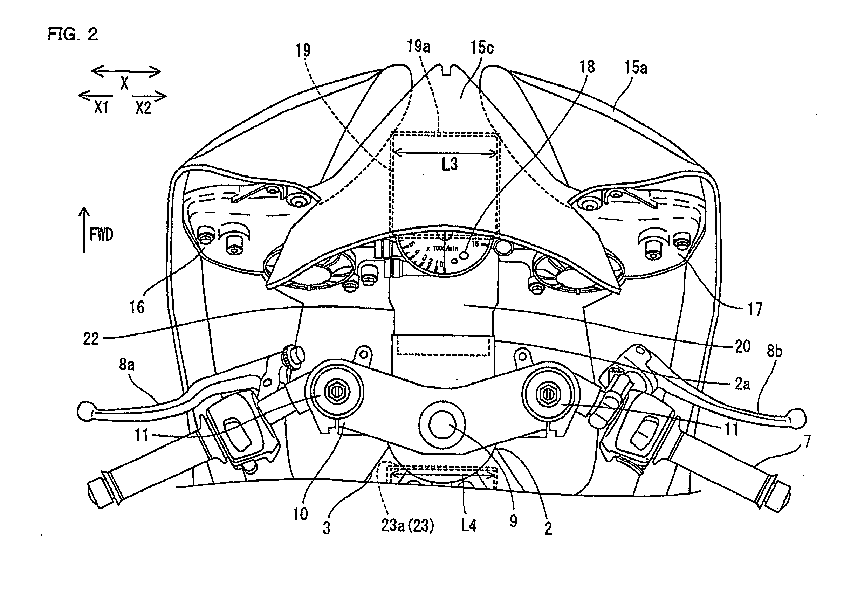

Fig. 2 is a plan view of a peripheral structure of the handle 7. A clutch lever 8a is provided on the left side (in the direction of the arrow X1) of the handle 7. A brake lever 8b is provided on the right side (in the direction of the arrow X2) of the handle 7. An indicator 18 is provided in front of the handle 7. The indicator 18 includes a speed meter that indicates the traveling speed of the motorcycle 1, a fuel gauge that indicates the remaining amount of fuel, and the like. The indicator 18 has its upper part covered with the screen 15c.

A steering shaft 9 is inserted into the head pipe 2. An upper bracket 10 to which the upper part of the steering shaft 9 is fixed is provided above the head pipe 2. Both ends in the right-left direction (in the direction of the arrow X) of the upper bracket 10, in other words, both ends in the vehicle widthwise direction are provided with the pair of the front forks 11.

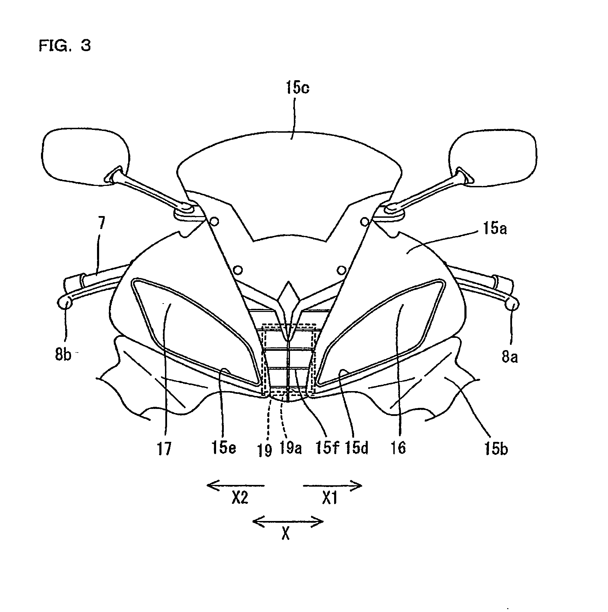

Fig. 3 is a front view of a structure of the front cowling. The upper cowling 15a has left and right openings 15d and 15e. A left headlight 16 and a right headlight 17 are provided at the openings 15d and 15e, respectively. A panel 15f is provided in a center of the upper cowling 15a. The left and right headlights 16 and 17 are an example of the "headlight" according to the present invention.

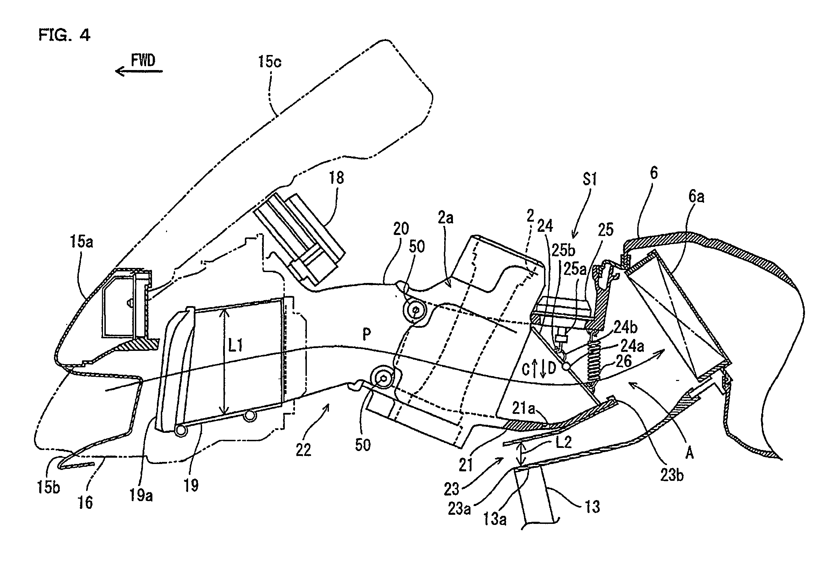

Fig. 4 is a left side view of an arrangement of ducts. The indicator 18 is provided in front of the head pipe 2 and under the screen 15c. A duct front portion 19 that guides air to the air cleaner 6 is provided under and in front of the indicator 18. The duct front portion 19 has an intake port 19a opened forward. As shown in Fig. 3, the intake port 19a is provided between the left headlight 16 and the right headlight 17. The intake port 19a is an example of the "first intake port" according to the present invention.

A duct central portion 20 is connected to a rear part of the duct front portion 19. The indicator 18 is attached above the duct central portion 20. The rear part of the duct central portion 20 is connected with a duct connecting portion 2a that surrounds the head pipe 2. A rear part of the duct connecting portion 2a is connected with a duct rear portion 21. A rear part of the duct rear portion 21 is connected with the air cleaner 6.

Air introduced from the intake port 19a is sent in the direction of the arrow P and passed from the duct front portion 19 to the central portion 20. The air entering the duct central portion 20 is then passed to the duct rear portion 21 through the duct connecting portion 2a. The air entering the duct rear portion 21 is then supplied toward the back into the air cleaner 6. A main duct 22 includes the duct front portion 19, the duct central portion 20, the duct connecting portion 2a and the duct rear portion 21. The main duct 22 is an example of the "first duct" according to the present invention. A front end of the main duct 22 is the intake port 19a of the duct front portion 19 opened to the front. The main duct 22 is opened to the front.

A sub duct 23 is provided under the duct rear portion 21 of the main duct 22. The sub duct 23 sends air into the air cleaner 6 similarly to the main duct 22. The sub duct 23 has an intake port 23a opened forward. In this way, the main and sub ducts 22 and 23 are both opened forward. The sub duct 23 has a joining portion 23b that joins the duct rear portion 21 of the main duct 22 on the downstream side of an intake valve 24.

The sub duct 23 guides air behind the head pipe 2. The sub duct 23 is connected with the air cleaner 6 behind the head pipe 2. The sub duct 23 is adjacent to an upper end 13a of the radiator 13. This allows part of traveling wind coming into the radiator 13 to be taken into the sub duct 23. The sub duct 23 is an example of the "second duct" according to the present invention, and the intake port 23a is an example of the "second intake port" according to the present invention.

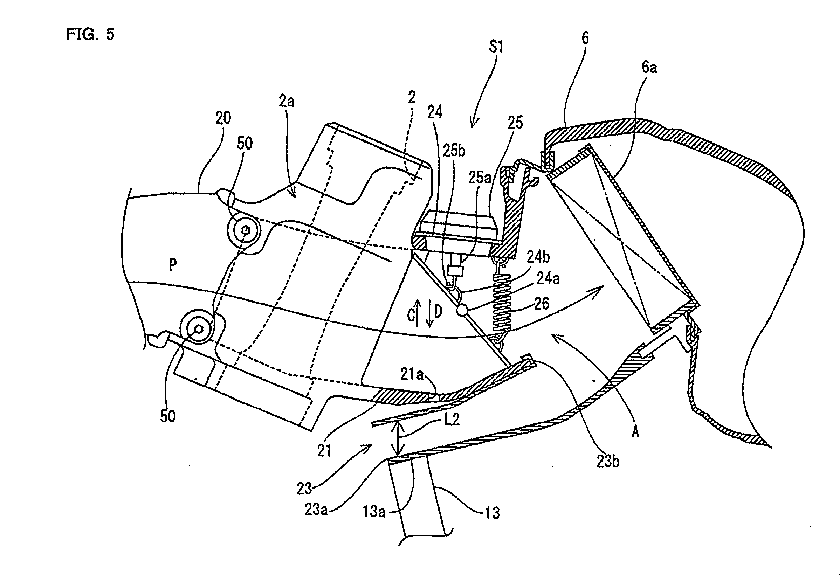

Fig. 5 is an enlarged view of a peripheral structure of the duct rear portion 21. As shown in Fig. 5, the intake valve 24 is provided at the duct rear portion 21 of the main duct 22. The intake valve 24 rotates to open/close the duct rear portion 21. More specifically, the intake valve 24 opens/closes, so that the main duct 22 is opened/closed. The intake valve 24 is an example of the "opening/closing valve" according to the present invention.

An actuator 25 arranged to rotate the intake valve 24 is provided above the duct rear portion 21. The actuator 25 is an example of the "driving portion" according to the present invention.

The actuator 25 is provided in a space S1 between the head pipe 2 and the air cleaner 6. The actuator 25 includes an extendable portion 25a that expands or contracts in the vertical direction (in the directions of the arrows C and D) and a hook 25b attached to the extendable portion 25a to be hooked at the connecting portion 24b of the intake valve 24.

A spring 26 is provided between the intake valve 24 and an upper wall of the duct rear portion 21. The spring 26 continuously applies tensile force in the direction to open the intake valve 24. When the actuator 25 does not apply force on the intake valve 24, the intake valve 24 rotates by the tensile force of the spring 26 to a position where the duct rear portion 21 is opened.

As shown in Figs. 4 and 5, when the extendable portion 25a of the actuator 25 contracts upward (in the direction of the arrow C), the intake valve 24 attains a closed state A (see Fig. 4). More specifically, the actuator 25 rotates the intake valve 24 against the tensile force of the spring 26 to the closed state A. When the intake valve 24 is in the closed state A, the air flow from the main duct 22 to the air cleaner 6 is cut off. In this case, air is sent into the air cleaner 6 only from the sub duct 23.

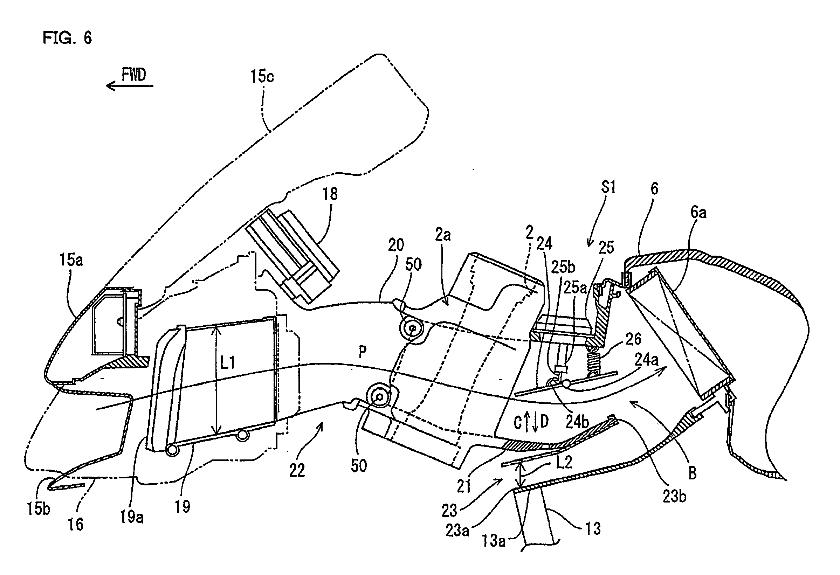

Fig. 6 is a view of the duct when the intake valve 24 attains an open state B. When the extendable portion 25a of the actuator 25 expands downward (in the direction of the arrow D), the force of the hook 25b that pulls the connecting portion 24b upward is removed. In this way, the tensile force of the spring 26 causes the intake valve 24 to attain the open state B. When the intake valve 24 is in the open state B, air is let in from the main duct 22 to the air cleaner 6. In this case, air is sent to the air cleaner 6 both from the main and sub ducts 22 and 23.

As shown in Fig. 5, a discharge port 21a is formed under the duct rear portion 21. The air coming into the main duct 22 from the intake port 19a sometimes contains moisture (water). The water in the air taken into the main duct 22 is discharged from the discharge port 21a. A rear side of the discharge port 21 is inclined upward. Therefore, the water does not come into the air cleaner 6 and can be discharged efficiently from the discharge port 21a. If water is pushed by the flow of the air and sent to a side of the air cleaner 6, the water is flowed to the sub duct 23 underneath upon reaching behind the joining portion 23b. Therefore, the water is not flowed to the air cleaner 6 and can be discharged also from the intake port 23a of the sub duct 23.

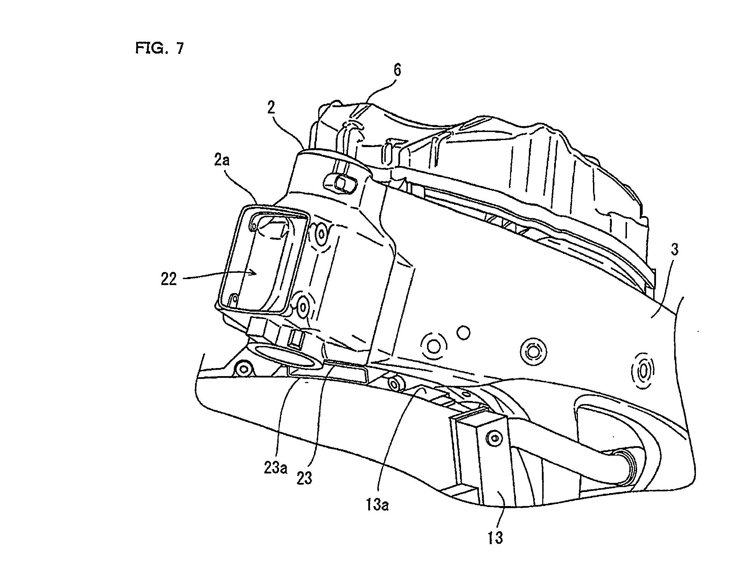

Fig. 7 is a perspective view of the head pipe 2 and the sub duct 23. As described above, the duct connecting portion 2a that serves as a part of the main duct 22 is formed around the head pipe 2. A front part of the duct connecting portion 2a is opened. The duct connecting portion 2a and the duct central portion 20 are connected and fixed by bolts 50 as shown in Fig. 4.

The intake port 23a having an elongate shape in the right-left direction is provided under the head pipe 2. The sub duct 23 takes in air from the intake port 23a. The lower part of the intake port 23a is adjacent to the radiator 13. The front part of the radiator 13 forms a space used to taken in air into the radiator 13. Using the space, the sub duct 23 can introduce air efficiently.

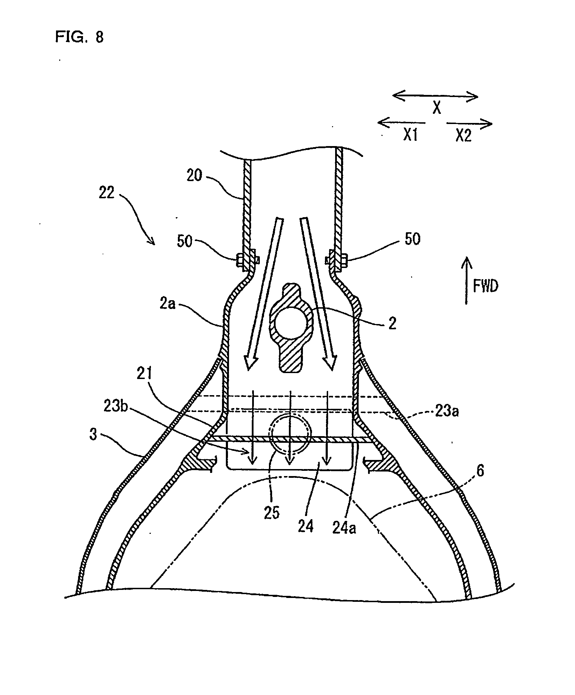

Fig. 8 is a sectional view of the head pipe 2 and the main frame 3. The main frame 3 extends as it branches to the left and right (in the directions of the arrows X1 and X2) from the position of the head pipe 2. The air cleaner 6 supplied with air from the main and sub ducts 22 and 23 is provided between the branched parts of the main frame 3. The air cleaner 6 is an example of the "air chamber" according to the present invention. An air filter 6a used to remove foreign matter included in intake air is provided at the front part of the air cleaner 6.

As shown in Fig. 8, the intake path in the main duct 22 is formed both on the right and left sides of the head pipe 2. More specifically, the duct connecting portion 2a surrounds the head pipe 2 when seen in a plan view. Air introduced from the duct central portion 20 is sent into the duct connecting portion 2a and passes both the left and right sides of the head pipe 2. The duct rear portion 21 sends the air taken into the duct connecting portion 2a to the air cleaner 6 positioned behind. In this way, the air taken into the main duct 22 receives slight resistance in the head pipe 2 but is supplied in a substantially straight path to the air cleaner 6. Therefore, air can be supplied to the engine 12 efficiently during supercharging.

The intake amount of the sub duct 23 is smaller than that of the main duct 22. As shown in Fig. 4, the vertical length L1 of the main duct 22 near the intake port 19a is smaller than the vertical length L2 of the sub duct 23 near the intake port 23a. As shown in Fig. 2, the length L3 of the main duct 22 near the intake port 19a in the vehicle widthwise direction is approximately the same as the length L4 of the sub duct 23 near the intake port 23a in the vehicle widthwise direction. Therefore, the opening area of the intake port 23a of the sub duct 23 is smaller than the opening area of the intake port 19a of the main duct 22. When the main duct 22 is closed by the intake valve 24 (in the state shown in Figs. 4 and 5), air is sent into the air cleaner 6 only from the sub duct 23 whose intake amount is smaller than that of the main duct 22. In this way, the flow rate of air sent into the air cleaner 6 can be reduced. Therefore, the intake noise can be reduced.

Furthermore, as shown in Fig. 4 or the like, the length of the intake path of the sub duct 23 is shorter than the intake path of the main duct 22. When the main duct 22 is closed by the intake valve 24, the intake noise can be reduced.

According to the first preferred embodiment, the main duct 22 that sends air into the cleaner 6 and the sub duct 23 having a smaller intake amount than the main duct 22 are provided. The main and sub ducts 22 and 23 are both opened forward. As compared to the case in which the main and sub ducts 22 and 23 are opened in different directions from the forward direction, traveling wind can be taken in more efficiently from the main and sub ducts 22 and 23. In this way, the intake efficiency of air to be sent into the air cleaner 6 can be improved.

According to the first preferred embodiment, the main duct 22 is provided with the intake valve 24. The sub duct 23 is connected with the main duct 22 on the downstream side of the intake valve 24. When the intake valve 24 is in the open state B, air is sent into the air cleaner 6 both from the main and sub ducts 22 and 23, so that the amount of the air sent into the air cleaner 6 can be increased. In this way, during supercharging, air can be supplied efficiently into the engine 12. When the intake valve 24 is the closed state A, air is sent into the air cleaner 6 only from the sub duct 23 having a smaller intake amount than the main duct 22, so that the amount of air sent into the air cleaner 6 can be reduced. When the intake valve 24 is in the closed state A, the intake noise can be reduced. The intake noise reduced state and the high intake efficiency state can be selected by controlling the intake valve 24.

According to the first preferred embodiment, the intake port 23a of the sub duct 23 is provided near the radiator 13 separately from the intake port 19a of the main duct 22. The sub duct 23 can obtain part of travelling wind blown against the radiator 13 from the intake port 23a. The front part of the radiator 13 has a space used to take in air into the radiator 13. Using the space, air can be introduced efficiently into the sub duct 23.

According to the first preferred embodiment, the sub duct 23 is provided under the main duct 22. More specifically, the main duct 22 and the sub duct 23 overlap each other when seen in a plan view. In this way, the main duct 22 having a larger length is arranged in the center of the vehicle body while the sub duct 23 can be provided near the main duct. The main duct 22 is positioned in the center of the vehicle body, so that a lot of air can be introduced efficiently during supercharging. The sub duct 23 can be stored under the main duct 22 without increasing the vehicle width. The length of the sub duct 23 is reduced, so that the intake port 23a can be provided above the radiator 13.

According to the first preferred embodiment, the intake port 19a of the main duct 22 is provided between the pair of left and right headlights 16 and 17. The space formed between the pair of left and right headlights 16 and 17 can be used effectively to provide the intake port 19a of the main duct 22.

According to the first preferred embodiment, the actuator 25 of the intake valve 24 is provided in the space S1 formed above the duct rear portion 21 of the main duct 22 and between the head pipe 2 and the air cleaner 6. The space S1 formed between the head pipe 2 and the air cleaner 6 can be utilized effectively to provide the actuator 25.

### Second Preferred Embodiment

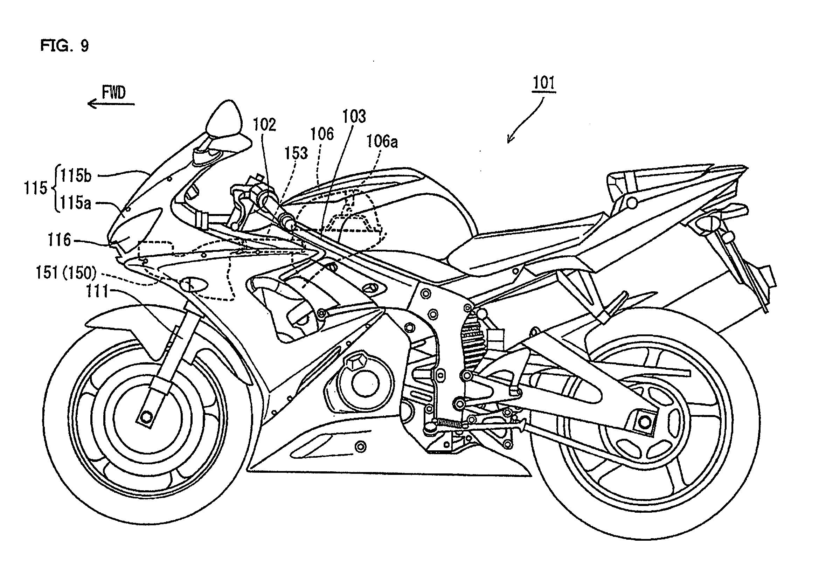

Fig. 9 is a left side view of an entire structure of a motorcycle 101 according to a second preferred embodiment of the present invention. The second preferred embodiment is different from the first preferred embodiment in that a main duct 122 and a sub duct 123 both have a shape curved to avoid a head pipe 102.

In the description of the second preferred embodiment, the front-back direction or the right and left refer to these directions with respect to the advancing direction of the vehicle unless otherwise specified. More specifically, the forward direction viewed from a rider on the seat is the forward direction of the motorcycle 101 and the right-left direction viewed from a rider on the seat is the right-left direction of the motorcycle 101. The vehicle widthwise direction is the same as the right-left direction.

As shown in Fig. 9, the head pipe 102 is provided in the front part of the vehicle. A main frame 103 is connected to a rear part of the head pipe 102. The main frame 3 extends backward and downward.

A front cowling 115 arranged to cover a front side of the motorcycle 101 is provided in front of the head pipe 102. The front cowling 115 includes an upper cowling 115a and a screen 115b attached above the upper cowling 115a. A duct 150 is provided under the upper cowling 115a.

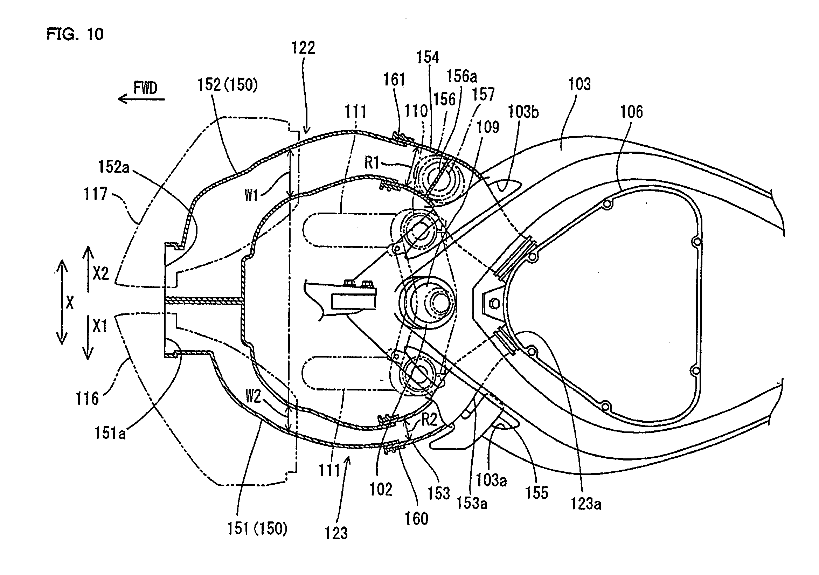

Fig. 10 is a plan view of ducts and main frame 103. As shown in Fig. 10, the main frame 103 is branched to the right and left (in the directions of the arrows X1 and X2) and extends backward.

An air cleaner 106 is provided behind the head pipe 102 and between the branched parts of the main frame 103 that extend to the right and left. The air cleaner 106 is an example of the "air chamber" according to the present invention.

As shown in Fig. 10, a steering shaft 109 is inserted into the head pipe 102. An upper bracket 110 used to support an upper part of the steering shaft 109 is provided above the head pipe 102. Both ends in the vehicle widthwise direction (in the direction of the arrow X) of the upper bracket 100 are provided with a pair of the front forks 111.

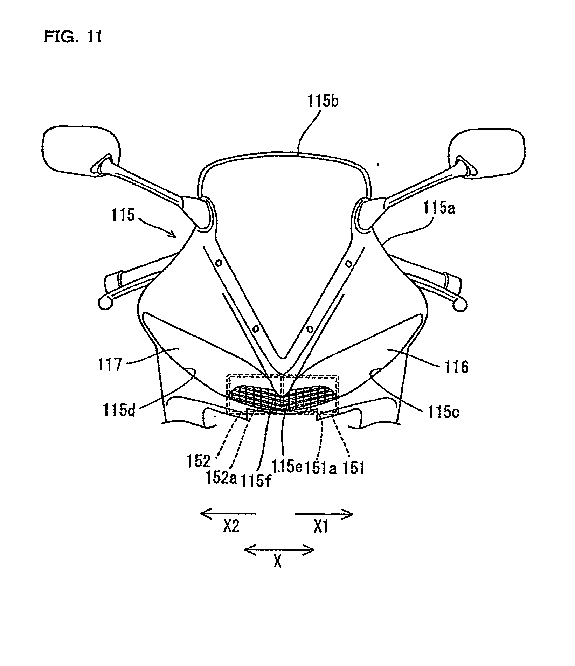

Fig. 11 is a front view of a structure of the front cowling 115. As shown in Fig. 11, the upper cowling 115a has left and right openings 115c and 115d on the left side (in the direction of the arrow X1) and on the right side (in the direction of the arrow X2), respectively. A left headlight 116 and a right headlight 117 are provided at the openings 115c and 115d, respectively.

An opening 115e that guides air into the intake ports 151a and 152a is provided in the center of the upper cowling 115a. The opening 115e includes a mesh member 115f that prevents foreign matter such as pebbles from coming into intake ports 151a and 152a that will be described. The left and right headlights 116 and 117 are an example of the "headlight" according to the present invention.

Referring back to Fig. 10, the duct 150 has a left duct 151 and a right duct 152.

The left duct 151 provided on the left side of the vehicle (in the direction of the arrow X1) has an intake port 151a opened forward. The left duct 151 sends air taken from the intake port 151a to the back. The left duct 151 is curved to expand to the left of the vehicle (in the direction of the arrow X1). The left duct 151 projects to the left of the vehicle to avoid the head pipe 102. A rear part of the left duct 151 is connected with the rear duct 153. The intake port 151a is an example of the "second intake port" according to the present invention. As shown in Fig. 11, the intake port 151a is provided between the left and right headlights 116 and 117.

The right duct 152 provided on the right side of the vehicle (in the direction of the arrow X2) has an intake port 152a opened forward. The right duct 152 sends air taken from the intake port 152a to the back. The right duct 152 is curved to expand to the right of the vehicle (in the direction of the arrow X2). The right duct 152 projects to the right of the vehicle so as to avoid the head pipe 102. A rear part of the right duct 152 is connected with a rear duct 154. The intake port 152a is an example of the "first intake port" according to the present invention. As shown in Fig. 11, the intake port 152a is provided adjacent to the intake port 151a and between the left and right headlights 116 and 117.

As described above, the rear duct 153 used to connect the left duct 151 and the air cleaner 106 is provided at the rear end of the left duct 151. The rear duct 153 curves toward the central side in the vehicle widthwise direction from the connection portion with the left duct 151. The left duct 151 and the rear duct 153 form the sub duct 123.

As shown in Fig. 10, the sub duct 123 has a joining portion 123 that joins the main duct 122 on the downstream side of the intake valve 156. The connecting portion between the left duct 151 and the rear duct 153 is provided at the outer most part of the sub duct 123 in the vehicle widthwise direction. More specifically, the sub duct 123 is shaped to project outwardly to the left (in the direction of the arrow X1) from the vicinity of the center in the vehicle widthwise direction so as to avoid the head pipe 102, the upper bracket 110, and the front forks 111, and then extends toward the center from the outermost part on the left side. The sub duct 123 is an example of the "second duct" according to the present invention.

The right duct 152 is formed to curve outwardly to the right (in the direction of the arrow X2) from the vicinity of the center in the vehicle widthwise direction. A rear duct 154 used to connect the right duct 152 and the air cleaner 106 is attached to the rear end of the right duct 152.

The rear duct 154 is formed to curve toward the center in the vehicle widthwise direction from the connecting portion with the right duct 152. The right duct 152 and the rear duct 154 form the main duct 122. The connecting portion between the right duct 152 and the rear duct 154 is provided at the outermost part of the main duct 122 in the vehicle widthwise direction (X-direction). The main duct 122 is shaped to project outwardly to the right (in the direction of the arrow X2) from the vicinity of the center in the vehicle widthwise direction so as to avoid the head pipe 102, the upper bracket 110, and the front forks 111 and then extend toward the center from the outermost part on the right side. The main duct 122 is an example of the "first duct" according to the present invention.

In this way, the intake path formed by the sub duct 123 is provided on an opposite side to the intake path formed by the main duct 122 with respect to the head pipe 102.

An opening 103a is provided on the front surface on the left side (on the side in the direction of the arrow X1) of the main frame 103 that extends in the right-left direction (in the directions of the arrows X1 and X2), and an opening 103b is provided at the front surface of the right side (on the side in the direction of the arrow X2) of the main frame 103.

The rear duct 153 of the sub duct 123 is inserted into the opening 103a of the main frame 103. The rear duct 153 extends toward the air cleaner 106 through the opening 103a.

The rear duct 154 of the main duct 122 is inserted into the opening 103b of the main frame 103. The rear duct 154 extends toward the air cleaner 106 through the opening 103b.

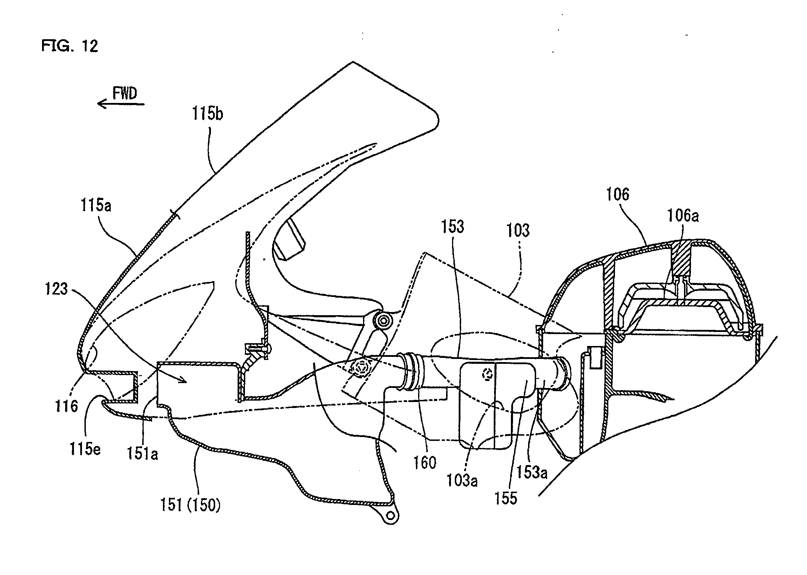

Fig. 12 is a left side view of the arrangement of the ducts. As shown in Fig. 12, the left duct 151 and the rear duct 153 are fastened by a connecting member 160.

As shown in Fig. 12, the air cleaner 106 is provided with an air filter 106a that removes foreign matter included the intake air.

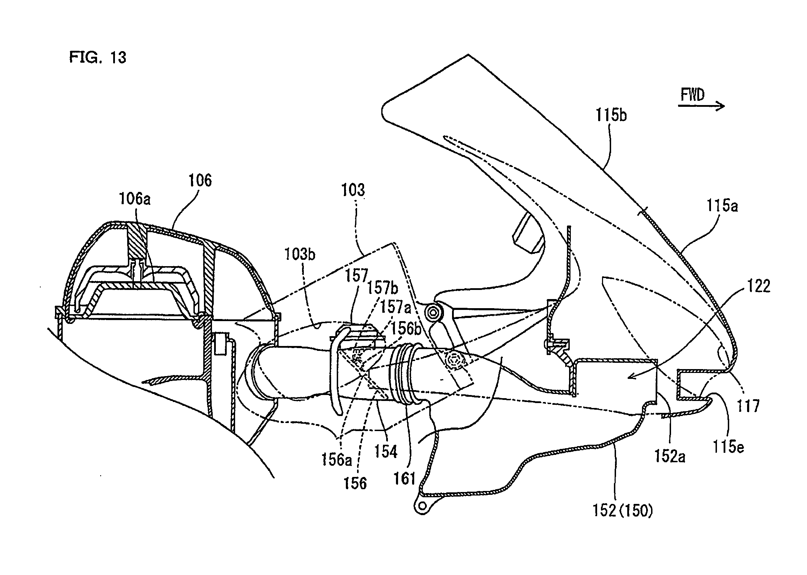

Fig. 13 is a right side view of the arrangement of the ducts. As shown in Fig. 13, the right duct 152 and the rear duct 154 are fastened by a connecting member 161.

As shown in Fig. 10, the sub duct 123 is formed to have an intake amount smaller than that of the main duct 122. More specifically, the inside of the right duct 152 of the main duct 122 has a width W1. The rear duct 154 of the main duct 122 has an inner diameter R1. On the other hand, the inside of the left duct 151 of the sub duct 123 has a width W2 smaller than the width W1. The rear duct 153 of the sub duct 123 has an inner diameter R2 smaller than the inner diameter R1. In this way, the sub duct 123 has an intake path narrower than that of the main duct 122, and therefore its intake amount is smaller than the main duct 122.

The rear duct 153 of the sub duct 123 is provided with a resonator 155 capable of reducing intake noise. The resonator 155 allows the noise of air coming into the resonator 155 from the rear duct 153 to be resonated with the noise of the air coming into the air cleaner 106 from the rear duct 153 and thus reduces the intake noise. The resonator 155 is provided on the outer side of the part 153a of the rear duct 153 that extends inwardly in the vehicle widthwise direction (X-direction). The resonator 155 is an example of the "volume chamber" according to the present invention.

As shown in Figs. 10 and 13, the intake valve 156 used to open/close the main duct 122 is provided in the rear duct 154 of the main duct 122. The intake valve 156 is an example of the "opening/closing valve" according to the present invention.

When the intake valve 156 is closed, air distributed to the main duct 122 is cut off. In this way, air is sent into the air cleaner 106 only from the sub duct 123. When the intake valve 156 is open, air is distributed in the main duct 122. In this way, air is sent into the air cleaner 106 both from the main duct 122 and the sub duct 123. When the main duct 122 is closed by the intake valve 156, air can be sent into the air cleaner 106 only from the sub duct 123 having a smaller intake amount than that of the main duct 122. The flow rate of air to be taken into the air cleaner 106 can be reduced by closing the intake valve 156. This results in reduced intake noise.

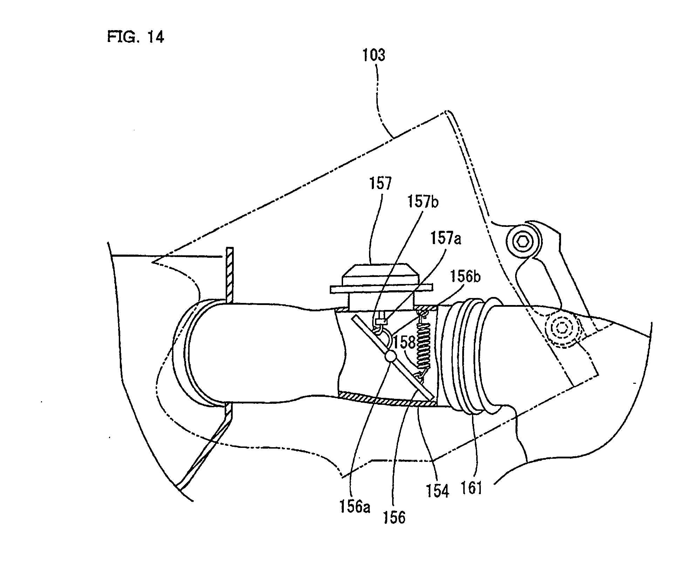

Fig. 14 is an enlarged view of the peripheral structure of the intake valve 156. As shown in Fig. 14, the intake valve 156 has a rotation shaft 156a that serves as the axial center of rotation during opening/closing. The intake valve 156 has a ring portion 156b hooked at the hook 157b of the actuator 157 near the rotation shaft 156a.

A spring 158 is provided between the intake valve 156 and an upper wall of the rear duct 154. The spring 158 applies force in the direction to open the intake valve 154.

The actuator 157 used to rotate the intake valve 156 is provided above the rear duct 154. The actuator 157 is an example of the "driving portion" according to the present invention. As shown in Fig. 10, the actuator 157 is provided in front of the opening 103b positioned at the front surface on the right side of the main frame 103 and above the rear duct 154. As shown in Fig. 14, the actuator 157 includes an extendable portion 157a that expands or contracts in the vertical direction and the hook 157b attached to the extendable portion 157a and hooked at the ring portion 156b of the intake valve 156.

The other structure of the second preferred embodiment is the same as that of the first preferred embodiment.

According to the second preferred embodiment, the intake port 152a of the main duct 122 connected to the air cleaner 106 and the intake port 151a of the sub duct 123 are formed to open forward. As compared to the case in which the intake port 152a of the main duct 122 and the intake port 152a of the sub duct 123 are provided to be open in different directions, traveling wind can be introduced more effectively. As a result, the intake efficiency of air sent into the air cleaner 106 can be improved.

The intake valve 156 used to open/close the flow path of air is provided in the main duct 122 and the joining portion 123a used to join the sub duct 123 and the main duct 122 is provided. When the intake valve 156 is opened, air is sent into the air cleaner 106 both from the main duct 122 and the sub duct 123, so that the amount of air sent into the air cleaner 106 can be increased. When the intake valve 156 is closed, air is sent into the air cleaner 106 only from the sub duct 123 having an intake amount smaller than the main duct 122, so that the amount of air to be taken into the air cleaner 106 can be reduced. In this way, the intake noise can be reduced. The intake noise reduced state and the high intake efficiency state can be selected by controlling the intake valve.

According to the second preferred embodiment, the intake port 152a of the main duct 122 and the intake port 151a of the sub duct 123 are provided adjacent to each other. In this way, both the intake ports 152a and 151a can be provided as they are opened forward in the center of the vehicle widthwise direction where the air pressure from traveling wind is maximized, in other words, in the center of the front cowling 115. The intake efficiency of air to come into the main and sub ducts 122 and 123 can be improved.

According to the second preferred embodiment, the resonator 155 in communication with the sub duct 123 is provided at the sub duct 123 having a smaller intake amount than that of the main duct 122. The resonance effect of the resonator 155 can reduce the intake noise of air coming from the sub duct 123. When air is taken in only from the sub duct 123 while the main duct 122 is shut off, the intake noise can further be reduced.

According to the second preferred embodiment, the main duct 122 is formed to project to the right in the vehicle widthwise direction (in the direction of the arrow X2) to avoid the head pipe 102 when seen in a plan view. The sub duct 123 is formed to project to the left in the vehicle widthwise direction (in the direction of the arrow X1) to avoid the head pipe 102. The main duct 122 and the sub duct 123 are connected to the air cleaner 106 and the intake port can be provided in the center of the vehicle body while avoiding the head pipe 102.

According to the second preferred embodiment, the sub duct 123 projects outwardly in the vehicle widthwise direction (in the direction of the arrow X1) to avoid the head pipe 102, and then extends inwardly. The resonator 155 is attached to the outer side of the portion 153a of the sub duct 123 that extends inwardly in the vehicle widthwise direction. Effectively using a space formed on the left side of the portion 153a of the sub duct 123 that extends inwardly, the resonator 155 can be provided. Since the resonator 155 can be prevented from projecting outwardly in the vehicle widthwise direction, so that the size of the sub duct 123 can be prevented from increasing in the vehicle widthwise direction.

According to the second preferred embodiment, the actuator 157 is provided at the rear duct 154 of the main duct 122. The actuator 157 is provided on the upstream side than the opening 103b of the main frame 103. The actuator 157 can be provided by effectively using the space on the upstream side of the opening 103b of the main frame 103.

The other effects of the second preferred embodiment are the same as those of the first preferred embodiment.

According to the first and second preferred embodiments, the motorcycle is an example of a straddle type vehicle including an air cleaner and a duct that guides air to the air cleaner. The present invention is not limited to the above and may be applied to any of other straddle type vehicles such as a tricycle and an ATV (All Terrain Vehicle) as long as the vehicle includes a headlight and a duct.

According to the first preferred embodiment, the intake port of the sub duct is provided near the upper end of the radiator by way of illustration. The present invention is not limited to the above and the intake port of the sub duct may be provided above the radiator and ahead of or behind the upper end of the radiator.

According to the first preferred embodiment, the intake port of the main duct is provided between the left and right headlights by way of illustration. The present invention is not limited to the above and the intake port may be provided above or under the left and right headlights.

According to the second preferred embodiment, the resonator is used to reduce the intake noise by the resonance effect as an example of the volume chamber. The present invention is not limited to the above and an expansion chamber that reduces the intake noise by expanding air coming from the duct may be provided.

According to the second preferred embodiment, the resonator is provided on the outer side of the part of the sub duct that extends to the inside of the duct portion. The present invention is not limited to the above and the resonator may be provided on the inner side of the portion of the sub duct that extends to the inside of the sub duct.

According to the second preferred embodiment, the resonator is attached only at the sub duct. The present invention is not limited to the above and a resonator may be provided at the main duct in addition to the sub duct. The resonator may be provided only at the main duct.

According to the second preferred embodiment, the intake ports of the main and sub ducts are provided separately and adjacent to each other. The present invention is not limited to the above, and a common intake port used to guide air to both the main and sub ducts may be provided.

## Claims

1. A straddle type vehicle (1, 101), comprising:
an engine (12);
an air chamber (6, 106) connected to the engine (12);
a head pipe (2, 102) provided ahead of the air chamber (6, 106);
a first duct (22, 122) formed to avoid the head pipe (2, 102) and connected to the air chamber (6, 106); and
a second duct (23, 123) formed to avoid the head pipe (2, 102) and having a smaller intake amount than that of the first duct (22, 122) connected to the air chamber (6, 106),
the first duct (22, 122) comprising:
a first intake port (19a, 152a) opened toward the front of the straddle type vehicle; and
an opening/closing valve (24, 156) arranged to open/close the flow path of air in the first duct (22, 122),
an intake path in the second duct (23, 123) being connected to an intake path in the first duct (22, 122) on the downstream side of the opening/closing valve (24, 156).

2. The straddle type vehicle (1, 101) according to claim 1, wherein the second duct (23, 123) comprises a second intake port (23a, 151a) opened toward the front of the straddle type vehicle.

3. The straddle type vehicle (1) according to claim 1 or 2, wherein the first duct (22) and the second duct (23) overlap each other when seen in a plan view.

4. The straddle type vehicle (1) according to any one of claims 1 to 3, wherein the length of the second duct (23) is shorter than the length of the first duct (22).

5. The straddle type vehicle (1) according to claim 2, further comprising a radiator (13) provided to cool the engine (12), the second intake port (23a) being provided near the radiator (13).

6. The straddle type vehicle (1) according to any one of claims 1 to 5, further comprising a pair of headlights (16, 17) provided apart from each other in the widthwise direction of the vehicle,
the first intake port (19a) being provided between the pair of headlights (16, 17).

7. The straddle type vehicle (1) according to any one of claims 1 to 6, further comprising a driving portion (25) that drives the opening/closing valve (24),
the driving portion (25) being provided above the first duct (22) in a space (S1) between the head pipe (2) and the air chamber (6).

8. The straddle type vehicle (101) according to claim 1 or 2, wherein the first duct (122) is provided in a first direction (X2) with respect to the widthwise direction of the vehicle, the second duct (123) is provided in a second direction (X1) opposite to the first direction (X2) with respect to the widthwise direction of the vehicle, and the head pipe (102) is provided between the first duct (122) and the second duct (123) with respect to the widthwise direction of the vehicle.

9. The straddle type vehicle (101) according to claim 8, wherein the first intake port (152a) and the second intake port (151a) are provided adjacent to each other.

10. The straddle type vehicle (101) according to claim 8, further comprising a volume chamber (155) in communication with the second duct (123).

11. The straddle type vehicle (101) according to claim 8, wherein the first duct (122) projects in the first direction (X2) to avoid the head pipe (102) when seen in a plan view, and the second duct (123) projects in the second direction (X1) to avoid the head pipe (102) when seen in a plan view.

12. The straddle type vehicle (101) according to claim 11, further comprising a volume chamber (155) in communication with the second duct (123), wherein the second duct (123) is shaped to project in the second direction (X1) to avoid the head pipe (102) and then extend in the first direction (X2), and the volume chamber (155) is attached on the side of the second direction (X1) of a part of the second duct (123) that extends in the first direction (X2).

13. The straddle type vehicle (101) according to any one of claims 8 to 12, further comprising a driving portion (157) that drives the opening/closing valve (156); and
a main frame (103) provided to hold the air chamber (106) with respect to the widthwise direction of the vehicle to extend backward from the head pipe (102),
the main frame (103) comprising an opening (103b) through which the first duct (122) is passed,
the driving portion (157) being provided on the upstream side of the opening (103b).

## Patentansprüche

1. Ein Grätsch-Typ-Fahrzeug (1, 101), das folgende Merkmale umfasst:
einen Motor (12);
eine Luftkammer (6, 106), die mit dem Motor (12) verbunden ist;
eine Hauptröhre (2, 102), die vor der Luftkammer (6, 106) vorgesehen ist;
eine erste Leitung (22, 21), die gebildet ist, um die Hauptröhre (2, 102) zu umgehen,
und die mit der Luftkammer (6, 106) verbunden ist; und
eine zweite Leitung (23, 123), die gebildet ist, um die Hauptröhre (2, 102) zu umgehen und einen geringeren Ansaugbetrag aufweist als denjenigen der ersten Leitung (22, 122), die mit der Luftkammer (6, 106) verbunden ist,
wobei die erste Leitung (22, 122) folgende Merkmale umfasst:
eine erste Ansaugöffnung (19a, 152a), die zu der Vorderseite des Grätsch-Typ-Fahrzeugs geöffnet ist; und
ein Öffnungs/Schließventil (24, 156), das angeordnet ist, um den Luftflussweg in der ersten Leitung (22, 122) zu öffnen/zu schließen,
einen Ansaugweg in der zweiten Leitung (23, 123), der mit einem Ansaugweg in der ersten Leitung (22, 122) auf der stromabwärtigen Seite des Öffnungs/Schließventils (24, 156) verbunden ist.

2. Das Grätsch-Typ-Fahrzeug (1, 101) gemäß Anspruch 1, bei dem die zweite Leitung (23, 123) eine zweite Ansaugöffnung (23a, 151a) umfasst, die zu der Vorderseite des Grätsch-Typ-Fahrzeugs geöffnet ist.

3. Das Grätsch-Typ-Fahrzeug (1) gemäß Anspruch 1 oder 2, bei dem die erste Leitung (22) und die zweite Leitung (23) von einer Draufsicht aus gesehen einander überlappen.

4. Das Grätsch-Typ-Fahrzeug (1) gemäß einem der Ansprüche 1 bis 3, bei dem die Länge der zweiten Leitung (23) kürzer ist als die Länge der ersten Leitung (22).

5. Das Grätsch-Typ-Fahrzeug (1) gemäß Anspruch 2, das ferner einen Kühler (13) umfasst, der vorgesehen ist, um den Motor (12) zu kühlen, wobei die zweite Ansaugöffnung (23a) nahe dem Kühler (13) vorgesehen ist.

6. Das Grätsch-Typ-Fahrzeug (1) gemäß einem der Ansprüche 1 bis 5, das ferner ein Paar von Vorderlichtern (16, 17) umfasst, die entfernt voneinander in der Breiterichtung des Fahrzeugs vorgesehen sind,
wobei die erste Ansaugöffnung (19a) zwischen dem Paar von Vorderlichtern (16, 17) vorgesehen ist.

7. Das Grätsch-Typ-Fahrzeug (1) gemäß einem der Ansprüche 1 bis 6, das ferner einen Antriebsabschnitt (25) umfasst, der das Öffnungs/Schließventil (24) antreibt,
wobei der Antriebsabschnitt (25) über der ersten Leitung (22) vorgesehen ist in einem Raum (S1) zwischen der Hauptröhre (2) und der Luftkammer (6).

8. Das Grätsch-Typ-Fahrzeug (101) gemäß Anspruch 1 oder 2, bei dem die erste Leitung (122) in einer ersten Richtung (X2) bezüglich der Breiterichtung des Fahrzeugs vorgesehen ist, die zweite Leitung (123) in einer zweiten Richtung (X1) entgegengesetzt zu der ersten Richtung (X2) bezüglich der Breiterichtung des Fahrzeugs vorgesehen ist, und die Hauptröhre (102) zwischen der ersten Leitung (122) und der zweiten Leitung (123) bezüglich der Breiterichtung des Fahrzeugs vorgesehen ist.

9. Das Grätsch-Typ-Fahrzeug (101) gemäß Anspruch 8, bei dem die erste Ansaugöffnung (152a) und die zweite Ansaugöffnung (151a) benachbart zueinander vorgesehen sind.

10. Das Grätsch-Typ-Fahrzeug (101) gemäß Anspruch 8, das ferner eine Volumenkammer (155) in Kommunikation mit der zweiten Leitung (123) umfasst.

11. Das Grätsch-Typ-Fahrzeug (101) gemäß Anspruch 8, bei dem die erste Leitung (122) in der ersten Richtung (X2) vorsteht, um die Hauptröhre (102) von einer Draufsicht aus gesehen zu umgehen, und die zweite Leitung (123) in der zweiten Richtung (X1) vorsteht, um die Hauptröhre (102) von einer Draufsicht aus gesehen zu umgehen.

12. Das Grätsch-Typ-Fahrzeug (101) gemäß Anspruch 11, das ferner eine Volumenkammer (155) in Kommunikation mit der zweiten Leitung (123) umfasst, wobei die zweite Leitung (123) geformt ist, um in der zweiten Richtung (X1) vorzustehen, um die Hauptröhre (102) zu umgehen, und sich dann in der ersten Richtung (X2) zu erstrecken, und die Volumenkammer (155) auf der Seite der zweiten Richtung (X1) eines Teils der zweiten Leitung (123) befestigt ist, der sich in der ersten Richtung (X2) erstreckt.

13. Das Grätsch-Typ-Fahrzeug (101) gemäß einem der Ansprüche 8 bis 12, das ferner einen Antriebsabschnitt (157) umfasst, der das Öffnungs/Schließventil (156) antreibt; und
einen Hauptrahmen (103), der vorgesehen ist, um die Luftkammer (106) bezüglich der Breiterichtung des Fahrzeugs zu halten, damit sich dieselbe von der Hauptröhre (102) nach hinten erstreckt,
wobei der Hauptrahmen (103) eine Öffnung (103b) umfasst, durch die die erste Leitung (122) geleitet wird,
wobei der Antriebsabschnitt (157) auf der stromaufwärtigen Seite der Öffnung (103b) vorgesehen ist.

## Revendications

1. Véhicule de type à selle (1, 101), comprenant:
un moteur (12);
une chambre à air (6, 106) connectée au moteur (12);
un tube principal (2, 102) prévu devant la chambre à (6, 106);
un premier conduit (22, 122) formé de manière à éviter le tube principal (2, 102) et connecté à la chambre à air (6, 106); et
un deuxième conduit (23, 123) formé de manière à éviter le tube principal (2, 102) et ayant une quantité d'entrée inférieure à celle du premier conduit (22, 122) connecté à la chambre à air (6, 106),
le premier conduit (22, 122) comprenant:
un premier orifice d'entrée (19a, 152a) ouvert vers l'avant du véhicule de type à selle; et
une soupape d'ouverture/fermeture (24, 156) disposé de manière à ouvrir/fermer le trajet de circulation d'air dans le premier conduit (22, 122),
un trajet d'entrée dans le deuxième conduit (23, 123) connecté à un trajet d'entrée dans le premier conduit (22, 122) du côté aval de la soupape d'ouverture/fermeture (24, 156).

2. Véhicule de type à selle (1, 101) selon la revendication 1, dans lequel le deuxième conduit (23, 123) comprend un deuxième orifice d'entrée (23a, 151a) ouvert vers l'avant du véhicule de type à selle.

3. Véhicule de type à selle (1) selon la revendication 1 ou 2, dans lequel le premier conduit (22) et le deuxième conduit (23) se recouvrent lorsque vus en vue en plan.

4. Véhicule de type à selle (1) selon l'une quelconque des revendications 1 à 3, dans lequel la longueur du deuxième conduit (23) est plus courte que la longueur du premier conduit (22).

5. Véhicule de type à selle (1) selon la revendication 2, comprenant par ailleurs un radiateur (13) prévu pour refroidir le moteur (12), le deuxième orifice d'entrée (23a) étant prévu près du radiateur (13).

6. Véhicule de type à selle (1) selon l'une quelconque des revendications 1 à 5, comprenant par ailleurs une paire de phares (16, 17) prévus séparés l'un de l'autre dans le sens de la largeur du véhicule,
le premier orifice d'entrée (19a) étant prévu entre la paire de phares (16, 17).

7. Véhicule de type à selle (1) selon l'une quelconque des revendications 1 à 6, comprenant par ailleurs une partie de commande (25) qui commande la soupape d'ouverture/fermeture (24),
la partie de commande (25) étant prévue au-dessus du premier conduit (22) dans un espace (S1) entre le tube principal (2) et la chambre à air (6).

8. Véhicule de type à selle (101) selon la revendication 1 ou 2, dans lequel le premier conduit (122) est prévu dans une première direction (X2) par rapport au sens de la largeur du véhicule, le deuxième conduit (123) est prévu dans une deuxième direction (X1) opposée à la première direction (X2) par rapport au sens de la largeur du véhicule, et le tube principal (102) est prévu entre le premier conduit (122) et le deuxième conduit (123) par rapport au sens de la largeur du véhicule.

9. Véhicule de type à selle (101) selon la revendication 8, dans lequel le premier orifice d'entrée (152a) et le deuxième orifice d'entrée (151a) sont prévus adjacents l'un à l'autre.

10. Véhicule de type à selle (101) selon la revendication 8, comprenant une chambre volumique (155) en communication avec le deuxième conduit (123).

11. Véhicule de type à selle (101) selon la revendication 8, dans lequel le premier conduit (122) fait saillie dans la première direction (X2), pour éviter le tube principal (102), lorsque vu en vue en plan, et le deuxième conduit (123) fait saillie dans la deuxième direction (X1), pour éviter le tube principal (102), lorsque vu en vue en plan.

12. Véhicule de type à selle (101) selon la revendication 11, comprenant par ailleurs une chambre volumique (155) en communication avec le deuxième conduit (123), dans lequel le deuxième conduit (123) est conformé de manière à faire saillie dans la deuxième direction (X1) pour éviter le tube principal (102) et puis s'étendre dans la première direction (X2), et la chambre volumique (155) est fixée du côté de la deuxième direction (X1) d'une partie du deuxième conduit (123) qui s'étend dans la première direction (X2).

13. Véhicule de type à selle (101) selon l'une quelconque des revendications 8 à 12, comprenant par ailleurs une partie de commande (157) qui commande la soupape d'ouverture/fermeture (156); et
un bâti principal (103) prévu pour maintenir la chambre à air (106) par rapport au sens de la largeur du véhicule, pour s'étendre vers l'arrière à partir du tube principal (102),
le bâti principal (103) comprenant une ouverture (103b) à travers laquelle est passé le premier conduit (122),
la partie de commande (157) étant prévu du côté amont de l'ouverture (103b).
